# EUROPEAN PATENT APPLICATION

(11) **EP 4 804 371 A1**
(43) Date of publication of application: **09.09.2026**
(21) Application number: 25858019.0
(22) Date of filing: 19.11.2025
(51) Int. Cl.: H02J 3/50

(54) **POWER GENERATION CONTROL METHOD AND APPARATUS BASED ON ACTIVE AND REACTIVE POWER REGULATION OF PHOTOVOLTAIC POWER GENERATION**

(30) Priority: 20.12.2024 CN 202411896392
(71) Applicant: Huadian Trading International (Beijing) Co., Ltd., Beijing 100071 (CN)
(72) Inventor: CHEN, Wei, Beijing 100071 (CN); CHEN, Taokai, Beijing 100071 (CN); LUO, Fazhuo, Beijing 100071 (CN); ZHU, Chaoxing, Beijing 100071 (CN); LI, Zetong, Beijing 100071 (CN); ZHANG, Zhuan, Beijing 100071 (CN); HU, Jian, Beijing 100071 (CN)
(74) Representative: Detken, Andreas
(86) International application number: PCT/CN2025/136033
(87) International publication number: WO 2026/130002

(57) **Abstract**

A method and an apparatus for power generation control based on active power and reactive power adjustments in photovoltaic power generation are provided. The method includes: acquiring a planned power generation curve allocated by a power grid side to a photovoltaic power plant and a predicted power generation curve generated by the photovoltaic power plant; determining whether the predicted power generation curve matches the planned power generation curve; in response to not matching, modifying the planned power generation curve through deep learning and transmitting the modified planned power generation curve to the photovoltaic power plant; in response matching, determining whether a measured power generation curve for an active power and a reactive power of the photovoltaic power plant matches the predicted power generation curve; modifying a panel cleaning solution of the photovoltaic power plant in response to the measured power generation curve not matching the predicted power generation curve; and performing, by the photovoltaic power plant, power generation control based on a plant equipment safety requirement and the planned power generation curve in response to the measured power generation curve matching the predicted power generation curve. By performing two matching determination processes, the planned power generation curve is approximated to the predicted power generation curve, and the measured power generation curve is also approximated to the predicted power generation curve. This enhances the certainty of photovoltaic power generation control, ensuring the service life and operating performance of the equipment, and overcomes difficulties of power generation control for the photovoltaic power plant.

## Description

This application claims the priority to Chinese Patent Application No. 202411896392.4, titled "METHOD AND APPARATUS FOR POWER GENERATION CONTROL BASED ON ACTIVE POWER AND REACTIVE POWER ADJUSTMENTS IN PHOTOVOLTAIC POWER GENERATION", filed on December 20, 2024 with the China National Intellectual Property Administration, which is incorporated herein by reference in its entirety.

### FIELD

The present disclosure relates to the technical field of power systems, and in particular to a method and an apparatus for power generation control based on active power and reactive power adjustments in photovoltaic (PV) power generation.

### BACKGROUND

In power systems, the power grid controls frequency by adjusting an active power, and controls voltage by adjusting a reactive power. Power plants are typically required to generate electricity based on a demand of a power grid side. The demand involves requiring the power plants to output more active power or more reactive power. Due to the high uncertainty in power generation from certain types of power plants (such as photovoltaic power plants) and varying characteristics of equipment used in different types of power plants, the difficulty of power generation control in power systems is further increased. Improper control can potentially cause damage to power plant equipment, failure to meet a power generation demand of the power grid, or reduced controllability of power generation costs or electricity consumption costs. Currently, for photovoltaic power generation scenarios with high uncertainty, how to achieve effective power generation control is a technical issue to be addressed in power systems.

### SUMMARY

In view of the above issues, a method and an apparatus for power generation control based on active power and reactive power adjustments in photovoltaic power generation are provided according to the present disclosure. The objective of the present disclosure is to provide a power generation control scheme for a photovoltaic power plant, to effectively overcome difficulties in power generation control.

The following technical solutions are provided according to embodiments of the present disclosure.

According to a first aspect of the present disclosure, a method for power generation control based on active power and reactive power adjustments in photovoltaic power generation is provided. The method includes:
acquiring a planned power generation curve for an active power and a reactive power which is allocated by a power grid side to a photovoltaic power plant, and acquiring a predicted power generation curve for the active power and the reactive power which is generated by the photovoltaic power plant;
determining whether the predicted power generation curve matches the planned power generation curve;
in response to the predicted power generation curve not matching the planned power generation curve, modifying, by the power grid side, the planned power generation curve through deep learning, and transmitting, by the power grid side, the modified planned power generation curve to the photovoltaic power plant;
in response to the predicted power generation curve matching the planned power generation curve, determining whether a measured power generation curve for the active power and the reactive power of the photovoltaic power plant matches the predicted power generation curve;
   in response to the measured power generation curve not matching the predicted power generation curve, modifying a panel cleaning solution of the photovoltaic power plant; and
   in response to the measured power generation curve matching the predicted power generation curve, performing, by the photovoltaic power plant, power generation control based on a plant equipment safety requirement and the planned power generation curve received by the photovoltaic power plant.

In an embodiment, the performing, by the photovoltaic power plant, power generation control based on the plant equipment safety requirement and the planned power generation curve received by the photovoltaic power plant includes:
determining whether the plant equipment safety requirement of the photovoltaic power plant is met in a case of performing active and reactive power conversion control based on the planned power generation curve by the photovoltaic power plant during power generation;
in response to the plant equipment safety requirement being met, performing, by the photovoltaic power plant, power generation control based on the planned power generation curve; and
in response to the plant equipment safety requirement being not met, performing, by the photovoltaic power plant, power generation control based on the planned power generation curve by employing peak shaving technology.

In an embodiment, the determining whether the plant equipment safety requirement of the photovoltaic power plant is met in a case of performing active and reactive power conversion control based on the planned power generation curve by the photovoltaic power plant during power generation includes:
determining whether a current and a temperature of the plant equipment in the photovoltaic power plant meet the plant equipment safety requirement and whether an operating voltage of the plant equipment in the photovoltaic power plant is normal in a case of performing active and reactive power conversion control based on the planned power generation curve by the photovoltaic power plant during power generation.

In an embodiment, the performing, by the photovoltaic power plant, power generation control based on the planned power generation curve by employing peak shaving technology includes:
adjusting a conduction angle of a thyristor in the photovoltaic power plant to perform peak shaving.

In an embodiment, before performing power generation control, the method further includes:
analyzing variation characteristics of the active power and the reactive power of an inverter in the photovoltaic power plant under varying voltage conditions, and determining inflection point information in a variation characteristic curve for the active power and the reactive power at different voltages, where the inflection point information includes a value on a reactive power coordinate axis and the value on an active power coordinate axis, and
the performing power generation control includes:
   controlling a value of the reactive power of the inverter to be less than the value on the reactive power coordinate axis included in the inflection point information.

In an embodiment, the modifying, by the power grid side, the planned power generation curve through deep learning includes:
performing, by the power grid side, deep learning regarding a difference between measured daily power generation and historical daily power generation of the photovoltaic power plant and a difference between a performance ratio and a period-over-period performance ratio of the photovoltaic power plant, identifying, by the power grid side, an influence of haze based on panel cleaning degree data of the photovoltaic power plant, to adjust the planned power generation curve.

In an embodiment, the modifying a panel cleaning solution of the photovoltaic power plant includes:
analyzing a difference between measured daily power generation and historical daily power generation of the photovoltaic power plant;
for each zone in the photovoltaic power plant:
   analyzing a correspondence between panel cleaning degree data and a power generation efficiency of the zone;
   analyzing, based on the difference between measured daily power generation and historical daily power generation, the correspondence, the difference between a performance ratio of the zone and a period-over-period performance ratio of the zone, and a difference between an overall performance ratio and an overall period-over-period performance ratio of the photovoltaic power plant, to obtain an influence degree of haze on the zone; and
modifying a current panel cleaning solution based on respective influence degrees of haze on the zones.

In an embodiment, the modifying the current panel cleaning solution based on respective influence degrees of haze on the zones includes:
generating panel cleaning recommendation information based on the influence degrees of haze on the zones, where the panel cleaning recommendation information includes at least one of: area cleaning recommendation information, cleaning frequency recommendation information, cleaning speed recommendation information, and cleaning manpower configuration recommendation information; and
modifying the current panel cleaning solution based on the panel cleaning recommendation information.

In an embodiment, the planned power generation curve for the active power and the reactive power which is allocated by a power grid side to a photovoltaic power plant is generated by:
determining, by the power grid side, respective load curves to be allocated to power plants based on feature production factor data of the power plants and control production factor data of the power grid side, where the load curves include the planned power generation curve for the active power and the reactive power which is allocated to the photovoltaic power plant, the active power is used to control a frequency, and the reactive power is used to control a voltage.

In an embodiment, a scheme for generating, by the photovoltaic power plant, the predicted power generation curve for the active power and the reactive power includes:
generating, by the photovoltaic power plant, the predicted power generation curve for the active power and the reactive power based on equipment performance, weather data, and period-over-period power generation, where the equipment performance includes variation characteristics of the active power and the reactive power of an inverter under varying voltage conditions.

In an embodiment, before the performing, by the photovoltaic power plant, power generation control based on a plant equipment safety requirement and the planned power generation curve received by the photovoltaic power plant, the method further includes:
transmitting, by the photovoltaic power plant, electricity quantity data and cost data for a curtailment function to the power grid side; and
performing, by the photovoltaic power plant, power generation control based on the plant equipment safety requirement and the received planned power generation curve in response to a control instruction being received from the power grid side by the photovoltaic power plant, where the control instruction is transmitted after an agreement is reached between the power grid side and the photovoltaic power plant based on the electricity quantity data and the cost data.

According to a second aspect of the present disclosure, an apparatus for power generation control based on active power and reactive power adjustments in photovoltaic power generation is provided. The apparatus includes: a curve acquisition module, a matching determination module, a curve modification module, a cleaning solution modification module, and a power generation module.

The curve acquisition module is configured to acquire a planned power generation curve for an active power and a reactive power which is allocated by a power grid side to a photovoltaic power plant, and acquire a predicted power generation curve for the active power and the reactive power which is generated by the photovoltaic power plant.

The matching determination module is configured to determine whether the predicted power generation curve matches the planned power generation curve.

The curve modification module is configured to, in response to the predicted power generation curve not matching the planned power generation curve, modify, by the power grid side, the planned power generation curve through deep learning, and transmit, by the power grid side, the modified planned power generation curve to the photovoltaic power plant.

The matching determination module is further configured to determine whether a measured power generation curve for the active power and the reactive power of the photovoltaic power plant matches the predicted power generation curve in response to the predicted power generation curve matching the planned power generation curve.

The cleaning solution modification module is configured to modify a panel cleaning solution of the photovoltaic power plant in response to the measured power generation curve not matching the predicted power generation curve.

The power generation control module is configured to perform, by the photovoltaic power plant, power generation control based on a plant equipment safety requirement and the planned power generation curve received by the photovoltaic power plant in response to the measured power generation curve matching the predicted power generation curve.

Compared with the conventional technology, beneficial effects of the present disclosure are described as follows.

According to the present disclosure, a method and an apparatus for power generation control based on active power and reactive power adjustments in photovoltaic power generation are provided. The method includes: acquiring a planned power generation curve for an active power and a reactive power which is allocated by a power grid side to a photovoltaic power plant, and acquiring a predicted power generation curve for the active power and the reactive power which is generated by the photovoltaic power plant; determining whether the predicted power generation curve matches the planned power generation curve; in response to the predicted power generation curve not matching the planned power generation curve, modifying the planned power generation curve through deep learning and transmitting the modified planned power generation curve to the photovoltaic power plant; determining whether a measured power generation curve for an active power and a reactive power of the photovoltaic power plant matches the predicted power generation curve in response to the predicted power generation curve matching the planned power generation curve; modifying a panel cleaning solution of the photovoltaic power plant in response to the measured power generation curve not matching the predicted power generation curve; and performing, by the photovoltaic power plant, power generation control based on plant equipment safety requirement and the planned power generation curve received by the photovoltaic power plant in response to the measured power generation curve matching the predicted power generation curve. In the technical solution of the present disclosure, by analyzing whether the predicted power generation curve matches the planned power generation curve and instructing the power grid side to adjust the planned power generation curve through deep learning and transmit the adjusted planned power generation curve to the photovoltaic power plant in response to the predicted power generation curve not matching the planned power generation curve, a load plan of the power grid side stably converges towards a power generation trend predicted by the photovoltaic power plant. By analyzing whether the measured power generation curve matches the predicted power generation curve and adjusting the panel cleaning solution of the photovoltaic power plant accordingly, the measured conditions can be improved, enabling the measured power generation curve to closely approximate the predicted power generation curve, and greatly improving the certainty of photovoltaic power generation control in the power system. The photovoltaic power plant performs power generation control based on the plant equipment safety requirement, which ensures the longevity and optimal operating performance of the plant equipment. Evidently, the present disclosure addresses demands of both the power plant side and the power grid side, and effectively overcomes difficulties in power generation control for the photovoltaic power plant.

### BRIEF DESCRIPTION OF THE DRAWINGS

To clearly illustrate technical solutions in embodiments of the present disclosure or in the conventional technology, drawings to be used in the description of the embodiments or the conventional technology are briefly described below. Apparently, the drawings in the following description show only some embodiments of the present disclosure, and other drawings may be obtained by those skilled in the art based on the drawings without any creative effort.
FIG. 1 is a schematic diagram illustrating a scenario of a power system according to an embodiment of the present disclosure;
FIG. 2 is a flowchart of a method for power generation control based on active power and reactive power adjustments in photovoltaic power generation according to an embodiment of the present disclosure;
FIG. 3 is a schematic diagram illustrating a characteristic curve of an inverter;
FIG. 4 is a curve comparison diagram according to an embodiment of the present disclosure;
FIG. 5 is a schematic diagram illustrating a variation of a performance ratio of a photovoltaic power plant with respect to solar irradiance according to an embodiment of the present disclosure;
FIG. 6 is an example flowchart of modifying a panel cleaning solution of a photovoltaic power plant;
FIG. 7 is a flowchart of a method for power generation control based on active power and reactive power adjustments in photovoltaic power generation according to another embodiment of the present disclosure;
FIG. 8 is a signaling diagram of overall power control in a power system;
FIG. 9A is a schematic diagram of power factor configurations in segmented control;
FIG. 9B is a comparison schematic diagram illustrating effects of peak-shaving; and
FIG. 10 is a schematic structural diagram of an apparatus for power generation control based on active power and reactive power adjustments in photovoltaic power generation according to an embodiment of the present disclosure.

### DETAILED DESCRIPTION

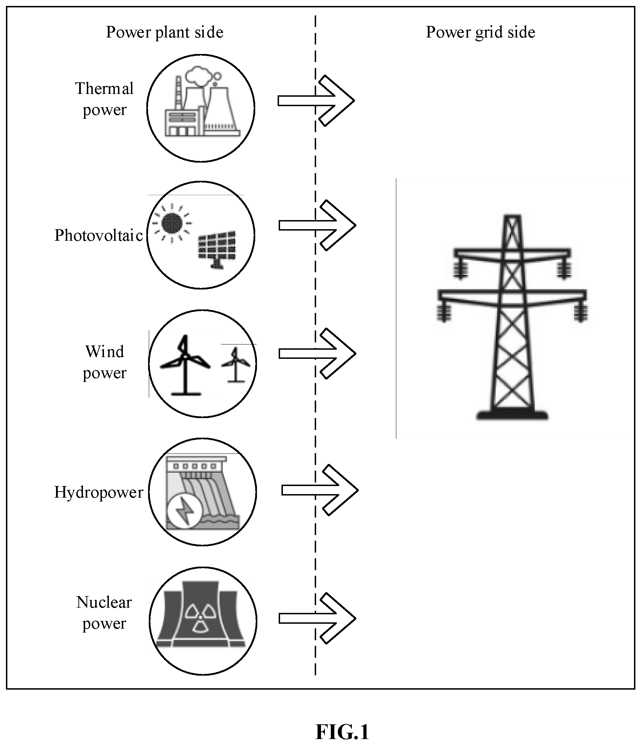

FIG. 1 is a schematic diagram illustrating a scenario of a power system. As shown in FIG. 1, power plants of various power generation types (such as photovoltaic power, thermal power, wind power, nuclear power, and hydropower) may communicate with and transmit power to a power grid side. These different types of source points can be collectively referred to as a power plant side. In an embodiment of the present disclosure, the power plant side reports its data to the power grid side to provide timely feedback, and the power grid side performs dispatching on the power plant side, for example, dispatching in terms of voltage, frequency, power, and the like. In actual power production, timely dispatching between the power grid side and the power plant side is required to achieve effective and stable power supply while meeting cost demands of both sides. In actual scenarios, the configuration of the power plant side is not limited to the several types of power plants shown in FIG. 1. Based on differences in power development level, power infrastructure, and abundance of natural resources among countries, the power supply structure of power systems in some countries may include only some of the types of power plants shown in FIG. 1.

As mentioned above, power generation of a photovoltaic power plant is influenced by factors such as weather and season, leading to high uncertainty and making power generation control difficult. Currently, a lack of effective solutions for power generation control exists. In response to this, in the present disclosure, the inventor proposes that, a planned power generation curve allocated by the power grid side to the photovoltaic power plant and a predicted power generation curve generated by the photovoltaic power plant are acquired firstly, and whether the predicted power generation curve matches the planned power generation curve is determined (first matching determination). In response to the predicted power generation curve not matching the planned power generation curve, the planned power generation curve is modified through deep learning, and the modified planned power generation curve is transmitted to the photovoltaic power plant. In response to the predicted power generation curve matching the planned power generation curve, whether a measured power generation curve for an active power and a reactive power of the photovoltaic power plant matches the predicted power generation curve is determined (second matching determination). In response to the measured power generation curve not matching the predicted power generation curve, a panel cleaning solution of the photovoltaic power plant is modified. In response to the measured power generation curve matching the predicted power generation curve, the photovoltaic power plant performs power generation control based on the planned power generation curve and a plant equipment safety requirement. There are two matching determination processes. In the first matching determination process, if matching is not achieved, the power grid side modifies the planned power generation curve through deep learning such that the planned power generation curve approximates to the predicted power generation curve, promoting a consensus on subsequent photovoltaic power generation for both sides. In the second matching determination process, a solution for cleaning a photovoltaic panel is modified such that the measured power generation curve approximates to the predicted power generation curve. The above measures improve the certainty of photovoltaic power generation control, ensure longevity and optimal operating performance of the plant equipment, overcome difficulties of power generation control for the photovoltaic power plant, and effectively address current technical issues.

To enable those skilled in the art to understand the solutions according to the present disclosure, the technical solutions in the embodiments of the present disclosure are described clearly and completely hereinafter with reference to the drawings in the embodiments of the present disclosure. Apparently, the described embodiments are only some rather than all of the embodiments of the present disclosure. Based on the embodiments of the present disclosure, all other embodiments obtained by those skilled in the art without any creative effort fall within the protection scope of the present disclosure.

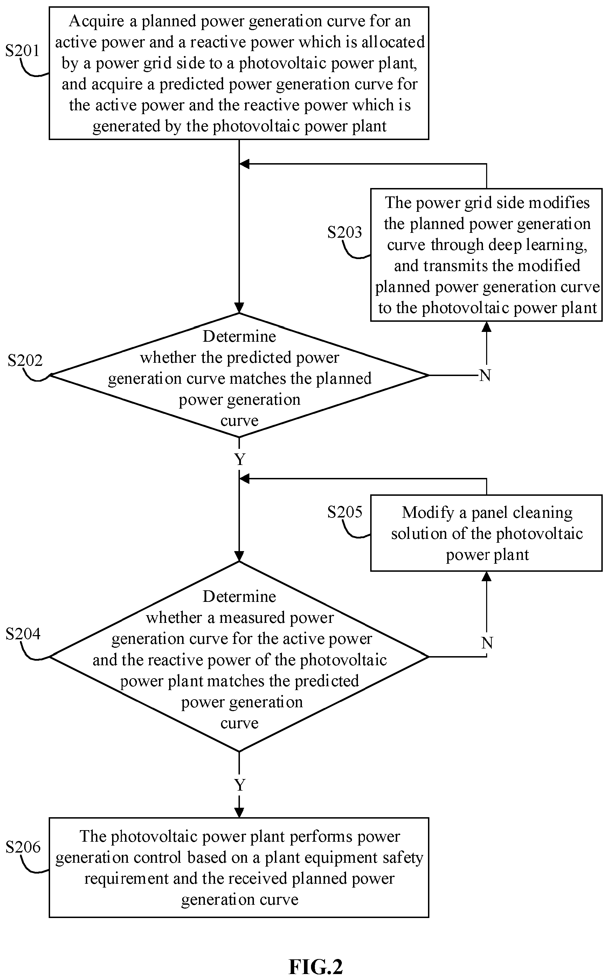

FIG. 2 is a flowchart of a method for power generation control based on active power and reactive power adjustments in photovoltaic power generation according to an embodiment of the present disclosure. As shown in FIG. 2, the method for power generation control based on active power and reactive power adjustments in photovoltaic power generation according to the present disclosure includes: steps S201 to S206.

In step S201, a planned power generation curve for an active power and a reactive power which is allocated by a power grid side to a photovoltaic power plant is acquired, and a predicted power generation curve for the active power and the reactive power which is generated by the photovoltaic power plant is acquired.

In an embodiment of the present disclosure, the power grid side determines respective load curves to be allocated to power plants based on feature production factor data of the power plants and control production factor data of the power grid side. The load curves include the planned power generation curve for the active power and the reactive power which is allocated to the photovoltaic power plant. The active power is used to control a frequency, and the reactive power is used to control a voltage.

The basis for dividing production factors of the power plant side is referred to as feature production factor set, and the basis for dividing the production factors of the power grid side is referred to as control production factor set.

The feature production factor set includes feature production factors in multiple levels. Specifically, these feature production factors can be subdivided into: first-level feature production factors, second-level feature production factors, and third-level feature production factors. The first-level feature production factor is natural feature production factor (or referred to as natural index), which directly reflects natural features. The second-level feature production factor is single-system feature production factor (or referred to as single-system index), which is a production factor related to a single system in the power system. The third-level feature production factor is plant-system feature production factor (or referred to as plant-system index), which is a production factor related to the overall system in the power system. As shown in FIG. 1, various types of power plants, such as thermal power plants, photovoltaic power plants, wind power plants, and hydropower plants, employ different power generation methods, different natural resources and different internal system structures. To achieve accurate digital power analysis, the technical solution of the present disclosure allows for the subdivision of first-level, second-level, and third-level feature production factors for each type of power generation. Thus, data corresponding to respective levels of feature production factors can be subsequently extracted for power plants of each power generation type.

In the embodiments of the present disclosure, the description is primarily made for cases of the photovoltaic power plant. Feature production factor data of the photovoltaic power plant utilized by the power grid side mainly involves data of first-level feature production factors and the data of third-level feature production factors. Taking photovoltaic power generation as an example, the first-level feature production factors include PV-specific irradiance, and the third-level feature production factors include photovoltaic efficiency.

The control production factor set includes multiple aspects of control production factors. The control production factors reflect the performance of the power grid, and are composed of some key physical quantities in the power system. The control production factors contribute to provide an effective theoretical basis for power system control. In an embodiment of the present disclosure, the involved control production factors include a relationship among the active power, the reactive power, and a voltage. The data form of the control production factors can be (voltage, active power, reactive power). In power systems, voltage is not directly related to frequency, but voltage and frequency are related to power (active power and reactive power, respectively), creating an indirect relationship. The voltage decreases when the reactive power is insufficient, and increases when the reactive power is excessive. The frequency decreases when the active power is insufficient, and increases when the active power is excessive.

Feature production factor data of the power plant can be transmitted to the power grid side, enabling the power grid side to promptly obtain specific values of the feature production factor data of the power plant. In addition, through digital processing, the feature production factor data can be converted into a vector form for deep learning and subsequent utilization. For the photovoltaic power plant, the power grid side determines the load curve to be allocated to the photovoltaic power plant based on the feature production factor data (PV-specific irradiance, photovoltaic efficiency, and the like) of the photovoltaic power plant and the control production factor data of the power grid side. The load curve is the planned power generation curve for the active power and the reactive power which is allocated to the photovoltaic power plant.

As an example, the power grid side establishes an irradiance data vector based on PV-specific irradiance data in Year 2023 provided by the power plant side, constructs a mapping function based on the irradiance data vector and the control production factor data, and performs power grid electricity forecasting by using the mapping function. In addition, digital processing is performed based on data-driven incentives and data provided by the power plant side, to predict a trend in the active power and the reactive power for the power grid. Based on the mechanism of the power grid and power generation equipment, the power generation control logic for the power grid side is formed. For example, the reactive power of the power plant side is to be increased when the voltage sags, and the active power of the power plant side is to be increased when the frequency declines. In addition, since different types of power generation equipment may exhibit correlations between capacity and frequency, the power grid side comprehensively determines the planned power generation curve allocated to each power plant based on these correlations.

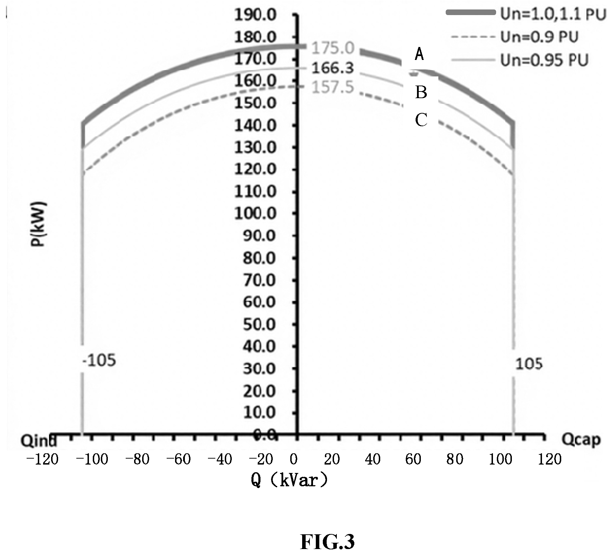

In addition, the power grid side generates the planned power generation curve based on equipment mechanisms (or equipment characteristics). Taking the photovoltaic power plant as an example, in a variation characteristic curve (P-Q curve) for the active power and the reactive power of an inverter, the horizontal axis represents the reactive power, and the vertical axis represents the active power. FIG. 3 is a schematic diagram illustrating a characteristic curve of an inverter. As shown in FIG. 3, the curves respectively represent the trend of the active power varying with the reactive power of the same inverter under different voltages. In FIG. 3, Un represents voltage, PU is the per-unit value (dimensionless), Q represents reactive power in kVar, P represents active power in kW. It can be seen from FIG. 3 that in the first quadrant, as the horizontal coordinate increases, the vertical coordinate exhibits a gradual decreasing trend. Beyond a certain point, the rate of decrease in the vertical coordinate with respect to increase in the horizontal coordinate becomes excessively pronounced (it can be understood as an overly steep slope or a slope exceeding a specific threshold). This significant turning point on the curve is referred to as an inflection point. The power grid side identifies inflection point information at which reactive power increase leading to undue reduction in active power. Based on equipment mechanisms of different power plants, the power grid side formulates respective planned power generation curves for them. During this process, the influence of voltage and frequency and the equipment characteristics can be considered, ensuring that the generated planned power generation curve controls the reactive power without unduly affecting the active power.

The power plant side generates the predicted power generation curve based on data on equipment performance and period-over-period power generation. In an embodiment, the photovoltaic power plant generates the predicted power generation curve for the active power and the reactive power based on equipment performance, weather data, and period-over-period power generation. Referring to FIG. 3, the equipment performance includes variation characteristics of the active power and the reactive power of the inverter used in the photovoltaic power plant under varying voltage conditions.

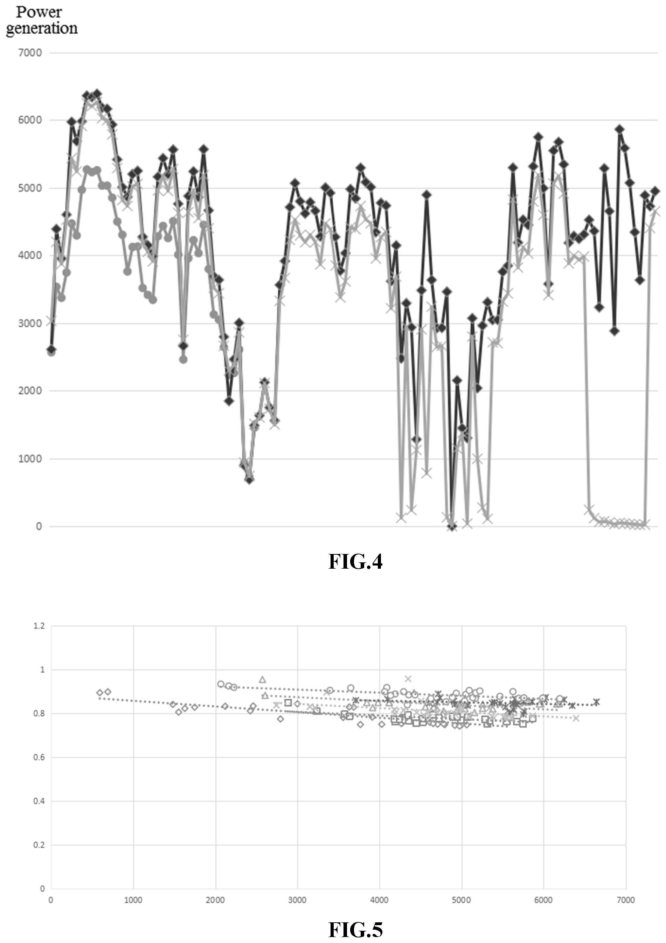

To facilitate understanding, an example of the planned power generation curve and the predicted power generation curve are illustrated through the drawings. FIG. 4 is a curve comparison diagram according to an embodiment of the present disclosure. In FIG. 4, the horizontal axis represents time, and the vertical axis represents power generation (unit: kW•h). The curve with diamond-shaped nodes represents the planned power generation curve generated by the power grid, the curve with X-shaped nodes represents the predicted power generation curve generated by the photovoltaic power plant, and the curve with circular nodes represents the measured power generation curve of the photovoltaic power plant. Each point on the curves represents the power generation on a specific day of a certain month.

It can be understood that the planned power generation curve represents the planning expectations of the power grid side, and the predicted power generation curve represents the achievable expectations of the power plant side. To achieve power generation control of the photovoltaic power plant effectively, it is essential for the power grid side and the power plant side to reach a common understanding. To illustrate with a counterexample, if a deviation between the planned power generation curve and the predicted power generation curve is excessively large, the power plant may fail to respond to the dispatching demand of the power grid side, which hinders mutual agreement on tariff, electricity quantities, and the like, to prevent successful transactions. Moreover, even if the power plant responds to the power grid side, the demand cannot be met ultimately. In some cases, such deviations may damage the equipment of the power plant, reducing the service life of the equipment and increasing the cost of power generation. Therefore, whether the two curves match is analyzed by using a matching determination method, and then appropriate measures are taken based on the determination results. Hereinafter, the introduction is made in conjunction with steps S202 to S204.

In step S202, whether the predicted power generation curve matches the planned power generation curve is determined, the process proceeds to step S203 in response to the predicted power generation curve not matching the planned power generation curve, and the process proceeds to step S204 in response to the predicted power generation curve matching the planned power generation curve.

In an embodiment of the present disclosure, matching determination for the predicted power generation curve and the planned power generation curve is referred to as the first matching determination in the technical solution of the embodiments of the present disclosure. The first matching determination is primarily to analyze whether a difference between the predicted power generation curve and the plan power generation is excessively large. If not matching, a curve difference is excessively large. If matching, the curve difference is within an acceptable range.

In addition to visual inspection on curve matching, the determination in this step can be alternatively made by means of some other matching evaluation methods that can be implemented automatically. For example, a matching result of the two curves can be evaluated by statistical means such as residual analysis, R-square value, least square method, root mean square error, and mean absolute error. The statistical tools and comparison methods on which the determination is based are not limited here.

If the predicted power generation curve matches the planned power generation curve, it indicates that the planned power generation curve of the power grid side is feasible. Then the subsequent operation processes can be executed, and the second matching determination can be performed by the power plant side in step S204. If the prediction generation curve does not match the planned power generation curve, it indicates that the planned power generation curve of the power grid side lacks feasibility. In this case, by implementing step S203, the power grid side actively modifies the planned power generation curve to enhance the feasibility of the modified planned power generation curve. Hereinafter, two processing branches after the first matching determination are introduced and described in conjunction with steps S203 and S204.

In step S203, the power grid side modifies the planned power generation curve through deep learning, and transmits the modified planned power generation curve to the photovoltaic power plant.

In a specific implementation of this step, the power grid side performs deep learning regarding a difference between measured daily power generation and historical daily power generation of the photovoltaic power plant and the difference between a performance ratio and the period-over-period performance ratio of the photovoltaic power plant, identifies an influence of haze based on panel cleaning degree data of the photovoltaic power plant, to adjust the planned power generation curve.

The measured daily power generation of the photovoltaic power plant is obtained through actual measurement and data collection. The historical daily power generation of the photovoltaic power plant is obtained by collecting historical data. For example, historical daily power generation data of the photovoltaic power plant in Years 2022 and 2023 is collected and stored in a database of historical data, and such historical daily power generation data is retrieved from the database and transmitted to the power grid side in response to a deep learning demand of the power grid side. Alternatively, the power grid side may possess the authority to query the historical daily power generation data of the photovoltaic power plant from the database. When the power grid side is required to perform deep learning, it can directly query and retrieve data from the database to achieve deep learning. Similarly, in addition to data related to daily power generation, period-over period comparison can also be performed for the performance ratio of the photovoltaic power plant. FIG. 5 is a schematic diagram illustrating a variation of a performance ratio of a photovoltaic power plant with respect to solar irradiance according to an embodiment of the present disclosure. In FIG. 5, the horizontal axis represents the solar irradiance in kW•h/m², and the vertical axis represents the performance ratio (dimensionless). Data points with the same shape represent the same month. Each dashed line in FIG. 5 is a regression line formed by aggregating data points of the same shape. As indicated by the dashed lines in FIG. 5, differences exist in the regression lines fitted for different months, which indicates that the trend of performance ratio with solar irradiance may differ across months.

In an embodiment of the present disclosure, data points that deviate significantly from the regression line can be removed. The removal of certain data points ensures the overall reliability of data simulation. In addition, by comparing historical efficiency, current efficiency, and efficiency trends, this method provides valuable guidance and corrections for power forecasting and day-ahead and intra-day trading.

Similar to FIG. 5, the power grid side compares the performance ratio of the photovoltaic power plant this year with period-over-period performance ratio, and then learns the differences in performance ratio.

In an embodiment of the present disclosure, during the deep learning process of the power grid side for modifying the planned power generation curve, the panel cleaning degree is considered. As shown in FIG. 4, there are instances where significant deviations exist between the planned power generation curve and the predicted power generation curve. In addition, the measured daily power generation for certain dates significantly differs from the period-over-period daily power generation, or the performance ratio of the photovoltaic power plant on certain dates significantly differs from the period-over-period performance ratio. Such significant differences in period-over-period data may stem from the impact of haze weather. Generally, haze persists for a long period and exerts a great impact on photovoltaic power generation. Moreover, haze particles accumulate on the surface of panels, potentially causing sustained effects on photovoltaic panels even after the haze ends. In response to this, the power grid side identifies the influence of haze based on panel cleaning degree data of the photovoltaic power plant. To facilitate understanding, the impact of panel cleaning on power generation efficiency is introduced below with an example.

The photovoltaic power plant is equipped with a transformer unit T01 and a transformer unit T02. Table 1 presents data on multiple dates, including solar irradiance, power generation (PG) of T01, cumulative cleaning ratio (CCR) of T01, unit system efficiency (USE) of T01, power generation of T02, cumulative cleaning ratio of T02, unit system efficiency of T02, system efficiency (SE) gap between T01 and T02, and power generation efficiencies (PGE) of two sets of inverters (T01-I26 and T01-I27) in T01.

In this example, the statistics are collected starting from December 1, 2020 and ending on January 4, 2021. From December 1, 2020, the system efficiency gradually declines from 80% to around 75%. On December 6, 2020, the backend network cable was accidentally disconnected by an Internet company, resulting in the loss of some solar irradiance data and distortion of the system efficiency. From December 9, 2020 to December 15, 2020, foggy weather persisted for a week, and there were instances of garbage and waste burning around the project site at night, rendering the system efficiency inaccurate during this period. As can be seen from Table 1, starting from December 22, 2020, the cleaning of the transformer unit T01 commenced, and data on the cumulative cleaning ratio of T01 begins to appear. From December 22, 2020 when module cleaning began until January 4, 2021, the system efficiency of the T01 unit gradually increases from 76% to 89%, representing an increase of approximately 13%. T02 is not cleaned at all during the statistical period, and thus the cumulative cleaning ratio of T02 remains at 0.00%. Before the cleaning of modules in the T01 transformer area (before December 22), the power generation efficiencies of T01 and T02 are comparable, with a weighted average difference of only about 1.6%. After module cleaning, the difference in power generation efficiency between the transformer units T01 and T02 gradually increased from 1.16% to 11.81%. After the cleaning of the T01-I26 inverter (cleaning completed for 11 days) and the T01-I27 inverter (cleaning completed for 12 days), no significant fluctuations exist in power generation efficiency. However, it can still be observed that the T01-I26 inverter possesses a slight advantage in power generation efficiency due to being cleaned one day later than the T01-I27 inverter.

By comparing the data in Table 1, the following conclusions can be drawn.

Based on the comparison of power generation efficiency between the T01 and T02 units, it can be observed that cleaning of photovoltaic modules greatly improves the power generation efficiency of the system, with an increase in the efficiency of approximately 10%. Based on the power generation performance of the T01-I26 and T01-I27 inverters over more than ten days after cleaning, it can be observed that no noticeable decline exists in power generation efficiency, indicating that a small amount of dust accumulated after cleaning has minimal impact on efficiency in the short term. Following the hazy weather from December 9, 2020 to December 15, 2020, the system efficiency exhibits substantial fluctuations, primarily due to differences between the solar irradiance measured by the weather station and the actual solar irradiance received by the photovoltaic panels during hazy days. Additionally, after the weather clears up on December 16, 2020, the haze particles adhere to the photovoltaic module surfaces solidified under intense sunlight, which may lead to the decline in system efficiency.

Through illustration of the above examples, it is readily apparent that by analyzing the panel cleaning degree data of the photovoltaic power plant, the impact of haze can be identified accurately and effectively. By performing deep learning on this, the power grid side can also modify and adjust the planned power generation curve driven by multi-source data.

**Table 1**

| Date | Irradiance | T01 PG | T01 CCR | T01 USE | T02 PG | T02 CCR | T02 USE | SE | PGE | PGE |
|---|---|---|---|---|---|---|---|---|---|---|
| | (kWh/m²) | (kWh) | | | (kWh) | | | (T01- T02) | (T01-127) | (101-126) |
| 2020/12/1 | 5566.76 | 26360.28 | 0.00% | 78.19% | 26304.5 | 0.00% | 78.02% | 0.17% | 80.24% | 78.57% |
| 2020/12/2 | 4663.33 | 22497.2 | 0.00% | 79.66% | 22215.03 | 0.00% | 78.66% | 1.00% | 82.77% | 80.75% |
| 2020/12/3 | 3688.87 | 18105.65 | 0.00% | 81.05% | 17842.07 | 0.00% | 79.87% | 1.18% | 86.73% | 83.05% |
| 2020/12/4 | 3635.82 | 17534.55 | 0.00% | 79.63% | 17160.47 | 0.00% | 77.93% | 1.70% | 85.35% | 81.86% |
| 2020/12/5 | 2793.82 | 14490.97 | 0.00% | 85.65% | 13996.06 | 0.00% | 82.72% | 2.93% | 90.39% | 86.68% |
| 2020/12/6 | 1845.9 | 12213.16 | 0.00% | 109.25% | 11926.46 | 0.00% | 106.69% | 2.56% | 116.55% | 112.17% |
| 2020/12/7 | 2462.15 | 12332.81 | 0.00% | 82.71% | 12010.84 | 0.00% | 80.55% | 2.16% | 87.36% | 84.06% |
| 2020/12/8 | 2999.75 | 14535.9 | 0.00% | 80.01% | 14323.25 | 0.00% | 78.84% | 1.17% | 84.76% | 81.38% |
| 2020/12/9 | 894.31 | 4961.31 | 0.00% | 91.60% | 4830.06 | 0.00% | 89.18% | 2.42% | 94.81% | 91.93% |
| 2020/12/10 | 691.67 | 4008.58 | 0.00% | 95.70% | 3897.88 | 0.00% | 93.05% | 2.64% | 98.69% | 95.86% |
| 2020/12/11 | 1483.48 | 8173.28 | 0.00% | 90.97% | 7988.05 | 0.00% | 88.91% | 2.06% | 97.41% | 93.79% |
| 2020/12/12 | 1629.78 | 8361.84 | 0.00% | 84.72% | 8201.91 | 0.00% | 83.10% | 1.62% | 90.12% | 86.44% |
| 2020/12/13 | 2121.03 | 10712.55 | 0.00% | 83.40% | 10597.18 | 0.00% | 82.50% | 0.90% | 87.53% | 84.19% |
| 2020/12/14 | 1749.13 | 8827.96 | 0.00% | 83.34% | 8713.45 | 0.00% | 82.26% | 1.08% | 87.78% | 84.43% |
| 2020/12/15 | 1554.27 | 7957.2 | 0.00% | 84.54% | 7626.26 | 0.00% | 81.02% | 3.52% | 88.78% | 84.77% |
| 2020/12/16 | 3561.56 | 17211.16 | 0.00% | 79.79% | 16774.61 | 0.00% | 77.77% | 2.02% | 84.88% | 81.21% |
| 2020/12/17 | 3914.94 | 18808.03 | 0.00% | 79.33% | 18528.19 | 0.00% | 78.15% | 1.18% | 84.91% | 81.16% |
| 2020/12/18 | 4711.38 | 21799.83 | 0.00% | 76.40% | 21408.36 | 0.00% | 75.03% | 1.37% | 82.15% | 78.20% |
| 2020/12/19 | 5065.6 | 23103.04 | 0.00% | 75.31% | 22828.15 | 0.00% | 74.41% | 0.90% | 81.35% | 77.68% |
| 2020/12/20 | 4797.68 | 22068.81 | 0.00% | 75.95% | 21762.86 | 0.00% | 74.90% | 1.05% | 81.63% | 78.00% |
| 2020/12/21 | 4617.63 | 21631.64 | 0.00% | 77.35% | 21346.27 | 0.00% | 76.33% | 1.02% | 83.20% | 79.70% |
| 2020/12/22 | 4784.48 | 22157.77 | 1.19% | 76.47% | 21820.31 | 0.00% | 75.31% | 1.16% | 81.93% | 78.38% |
| 2020/12/23 | 4656.98 | 21679.61 | 3.58% | 76.87% | 21443.04 | 0.00% | 76.03% | 0.84% | 82.60% | 78.93% |
| 2020/12/24 | 4277.58 | 20297.6 | 9.15% | 78.35% | 19800.71 | 0.00% | 76.43% | 1.92% | 90.04% | 81.10% |
| 2020/12/25 | 5001.06 | 23324.42 | 14.31% | 77.01% | 22682.14 | 0.00% | 74.89% | 2.12% | 89.90% | 86.91% |
| 2020/12/26 | 4921.01 | 23036.38 | 20.87% | 77.30% | 22158.35 | 0.00% | 74.35% | 2.95% | 89.60% | 87.49% |
| 2020/12/27 | 4271.05 | 20457.98 | 30.22% | 79.09% | 19492.8 | 0.00% | 75.36% | 3.73% | 90.89% | 88.88% |
| 2020/12/28 | 3771.14 | 17801.87 | 34.19% | 77.95% | 16803.15 | 0.00% | 73.57% | 4.37% | **87.89%** | 85.81% |
| 2020/12/29 | 4031.51 | 19424.29 | 43.34% | 79.56% | 18203.84 | 0.00% | 74.56% | 5.00% | 89.07% | 87.06% |
| 2020/12/30 | 4977.96 | 24245.61 | 51.29% | 80.42% | 22316.87 | 0.00% | 74.03% | 6.40% | 88.81% | 86.61% |
| 2020/12/31 | 4839.9 | 23061.25 | 58.85% | 78.68% | 21393.17 | 0.00% | 72. 99% | 5.69% | 87.14% | 84.79% |
| 2021/1/1 | 5293.01 | 26248.238 | 66.00% | 81.88% | 23781.693 | 0.00% | 74.19% | 7.69% | 87.83% | 86.09% |
| 2021/1/2 | 5081.34 | 25701.426 | 72.76% | 83.52% | 22908.946 | 0.00% | 74.44% | 9.07% | 88.95% | 86.94% |
| 2021/1/3 | 5008.47 | 25573.674 | 81.51% | 84.31% | 22530.37 | 0.00% | 74.28% | 10.03% | 88.81% | 86.85% |
| 2021/1/4 | 4340.17 | 23604.422 | 89.46% | 89.80% | 20500.833 | 0.00% | 78.00% | 11.81% | 90.90% | 90.25% |

In step S204, whether a measured power generation curve for an active power and a reactive power of the photovoltaic power plant matches the predicted power generation curve is determined, the process proceeds to step S205 in response to the measured power generation curve not matching the predicted power generation curve, and the process proceeds to step S206 in response to the measured power generation curve matching the predicted power generation curve.

Based on the above introduction of step S202, if the result of the first matching determination is yes, it means that the planned power generation curve of the power grid side is feasible. In this case, whether the actual measured conditions of the photovoltaic power plant match expectations is also required to be analyzed. Further, the second matching determination is performed in step S204. Specifically, the process includes: determining whether the measured power generation curve for an active power and a reactive power of the photovoltaic power plant matches the predicted power generation curve. For a clear understanding of the measured power generation curve and the predicted power generation curve, reference can be made to FIG. 4. In examples of FIG. 4, the curve with X-shaped nodes represents the predicted power generation curve of the photovoltaic power plant, and the curve with circular nodes represents the measured power generation curve of the photovoltaic power plant. The matching result of the two curves can be evaluated by statistical means such as residual analysis, R-square value, least square method, root mean square error, and mean absolute error. In an embodiment, the analyzing method used in the first matching determination process is the same as that used in the second matching determination process.

If the measured power generation curve matches the predicted power generation curve, it means that the deviation between the actual power generation and the expected power generation of the photovoltaic power plant is within an acceptable range. Then, the process proceeds to step S206, and the power generation process is implemented based on a safety requirement.

However, if the measured power generation curve does not match the predicted power generation curve, it means that the actual power generation deviates greatly from the expected power generation of the photovoltaic power plant. In this case, persisting on the received planned power generation curve for power generation clearly falls short of achieving the planned power generation effect of the power grid side. To facilitate the successful and stable conclusion of transactions between the power grid and the power plant, solutions are required to be implemented on the power plant side to improve the actual power generation condition of the photovoltaic power plant. Further, the process proceeds to step S205, to address the issue by initiating panel cleaning in the photovoltaic power plant. Hereinafter, two processing branches after the first matching determination are introduced and described in conjunction with steps S205 and S206.

In step S205, a panel cleaning solution of the photovoltaic power plant is modified.

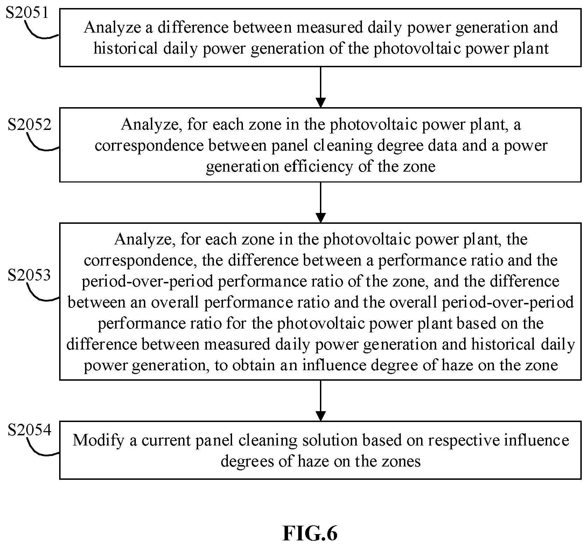

The panel cleaning solution is modified based on the consideration that the currently-used panel cleaning solution fails to meet the requirements of high-efficiency power generation in terms of speed, frequency or coverage, which leads to a large deviation between the measured power generation curve of the photovoltaic power plant and the predicted power generation curve. To address the issue, in an embodiment of the present disclosure, the difference in power generation, the relationship between panel cleaning and power generation efficiency, and the period-over-period difference in performance ratio are analyzed by using a data-driven method to obtain respective influence degrees of haze on various zones, and then the current panel cleaning solution is modified based on the influence degrees. FIG. 6 is an example flowchart for modifying a panel cleaning solution of a photovoltaic power plant. As shown in FIG. 6, the process of modifying a panel cleaning solution of a photovoltaic power plant includes: steps S2051 to S2054.

In step S2051, a difference between measured daily power generation and historical daily power generation of the photovoltaic power plant is analyzed.

In step S2052, for each zone in the photovoltaic power plant, a correspondence between panel cleaning degree data and a power generation efficiency of the zone is analyzed.

In an embodiment of the present disclosure, the photovoltaic power plant collects the measured daily power generation and the historical daily power generation within the power plant, and also obtains the panel cleaning degree data and the corresponding power generation efficiency data for zones. Through data statistics and data processing, the difference between the measured daily power generation and the historical daily power generation of the photovoltaic power plant can be analyzed, and the correspondence between the panel cleaning degree data and the power generation efficiency of each zone in the photovoltaic power plant can be analyzed.

In step S2053, for each zone in the photovoltaic power plant, the correspondence, the difference between a performance ratio and the period-over-period performance ratio of the zone, and the difference between an overall performance ratio and the overall period-over-period performance ratio of the photovoltaic power plant are analyzed based on the difference between the measured daily power generation and the historical daily power generation, to obtain an influence degree of haze on the zone.

To analyze the influence degree of haze on each zone, the difference between the performance ratio and the period-over-period performance ratio of the zone, and the difference between the overall performance ratio and the overall period-over-period performance ratio of the photovoltaic power plant are analyzed in this step. Therefore, the influence degree of haze on a single zone is analyzed from zoning and overall perspectives of the photovoltaic power plant. For example, if the power generation efficiency of a certain zone is low and the cleaning ratio is low, it is highly likely that inadequate or untimely cleaning is responsible for the reduced power generation efficiency. The influence degree of haze on the zone represents the disturbance degree of haze caused on the unsatisfactory power generation efficiency of the zone.

In step S2054, a current panel cleaning solution is modified based on respective influence degrees of haze on the zones.

Panel cleaning recommendation information is generated based on the influence degrees of haze on the zones. Then, the current panel cleaning solution is modified based on the panel cleaning recommendation information. The panel cleaning recommendation information includes at least one of: area cleaning recommendation information, cleaning frequency recommendation information, cleaning speed recommendation information, and cleaning manpower configuration recommendation information.

The area cleaning recommendation information offers recommendations on a cleaning ratio or a cleaning priority for specific zones.

The cleaning frequency recommendation information offers the recommended cleaning frequency. For example, it is recommended to clean once every two months, increase the cleaning frequency to clean once every half month in months with frequent haze, and the like.

The cleaning speed recommendation information offers the recommended cleaning speed. For example, the cleaning of all panels within the zone is recommended to be completed within 10 days.

The cleaning manpower configuration recommendation information offers the recommended manpower configuration scale. For example, 15 people are originally responsible for cleaning in each zone, and 25 people are responsible for cleaning after enhancing the cleaning manpower configuration. In this way, power generation in the zone can be restored to its ideal state rapidly.

In step S206, the photovoltaic power plant performs power generation control based on plant equipment safety requirement and the received planned power generation curve.

If the result of the second matching determination is yes, the actual power generation of the photovoltaic power plant closely approximates its predictions. Moreover, since the second matching determination is conducted only when the first matching determination is performed and the result of the first matching determination is yes, the premise of executing step S206 is that the results of the two matching determinations are both yes. Under this premise, it means that the actual power generation aligns with the power grid's plan for the photovoltaic power plant. Next, the photovoltaic power plant performs power generation control based on the plant equipment safety requirement and the received planned power generation curve, ensuring that the final power generation performance not only meets the planning and demand of the power grid side but also sustains the operating needs and the plant equipment safety requirement of the photovoltaic power plant.

In an embodiment, in this step, the following determination is performed first.

It is determined whether the plant equipment safety requirement of the photovoltaic power plant is met in a case of performing active and reactive power conversion control based on the planned power generation curve by the photovoltaic power plant during power generation. In response to the plant equipment safety requirement being met, the photovoltaic power plant performs power generation control based on the planned power generation curve. In response to the plant equipment safety requirement being not met, the photovoltaic power plant performs power generation control based on the planned power generation curve by employing peak shaving technology.

The determination of the plant equipment safety requirement may be specifically: determining whether a current and a temperature of the plant equipment in the photovoltaic power plant meet the plant equipment safety requirement and whether an operating voltage of the plant equipment in the photovoltaic power plant is normal in a case of performing the active and reactive power conversion control based on the planned power generation curve by the photovoltaic power plant during power generation.

The current, the temperature and the operating voltage are conventional parameters that can be collected when the equipment in photovoltaic power plant is in operation. If the photovoltaic power plant is operated while neglecting the impact of fluctuations in these parameters on the safety performance of the equipment, safety accidents are likely to occur, and even the ecological environment may be damaged. In addition, the guarantee of performance safety corresponds to the power generation cost of the power plant. If power generation is performed without considering the safety performance of the plant equipment, it is likely to result in frequent equipment failures, necessitating frequent equipment replacements and causing unnecessary equipment loss. Data about rated power, rated current and rated operating temperature can be obtained from the factory configuration or user guide of the equipment. In an embodiment of the present disclosure, by analyzing the current, temperature and operating voltage of the equipment in the photovoltaic power plant, it is determined whether the plant equipment safety requirement of the photovoltaic power plant is met in a case of performing active and reactive power conversion control based on the planned power generation curve during the power genenration. This ensures the stability and reliability of photovoltaic power generation in the power system.

In an embodiment of the present disclosure, in response to the plant equipment safety requirement being not met, the photovoltaic power plant performs power generation control based on the planned power generation curve by employing peak shaving technology. Generally, some photovoltaic power plants achieve peak shaving by deactivating components. However, according to the terms of take-or-pay and Power Purchase Agreement (PPA, a long-term power purchase contract signed between the power generator and the power purchaser), a certain amount of reactive power requires to be generated. In low-voltage scenarios, the generation of reactive power, based on the inverter characteristic curve, greatly impacts the active power, thereby affecting power generation and electricity charges. Therefore, by employing artificial intelligence to digitally analyze the physical processes, the reactive power is adjusted during periods of maximum output capacity. Peak shaving is performed to convert excess active power into reactive power to meet contract requirements, reactive power generation during normal operations is minimized, to maximize active power generation. In an embodiment, a conduction angle of a thyristor in the photovoltaic power plant is adjusted to perform peak shaving. In this way, in this solution, the current can be controlled and the safety and service life of the equipment can be enhanced.

Before performing power generation control, the method further includes: analyzing variation characteristics of the active power and the reactive power of an inverter in the photovoltaic power plant under varying voltage conditions, and determining inflection point information in a variation characteristic curve for the active power and the reactive power at different voltages.

The performing power generation control includes: controlling the value of the reactive power of the inverter to be less than the value on the reactive power coordinate axis included in the inflection point information. The reactive power is kept below the inflection point to avoid the active power being deeply affected.

In the technical solution of the present disclosure, by analyzing whether the predicted power generation curve matches the planned power generation curve and instructing the power grid side to adjust the planned power generation curve through deep learning and transmit the adjusted planned power generation curve to the photovoltaic power plant in response to the predicted power generation curve not matching the planned power generation curve, a load plan of the power grid side stably converges towards a power generation trend predicted by the photovoltaic power plant. By analyzing whether the measured power generation curve matches the predicted power generation curve and adjusting the panel cleaning solution of the photovoltaic power plant accordingly, the measured conditions can be improved, enabling the measured power generation curve to closely approximate the predicted power generation curve, and greatly improving the certainty of photovoltaic power generation control in the power system. The photovoltaic power plant performs power generation control based on the plant equipment safety requirement, which ensures the longevity and optimal operating performance of the plant equipment. Evidently, the present disclosure addresses demands of both the power plant side and the power grid side, and effectively overcomes difficulties in power generation control for the photovoltaic power plant.

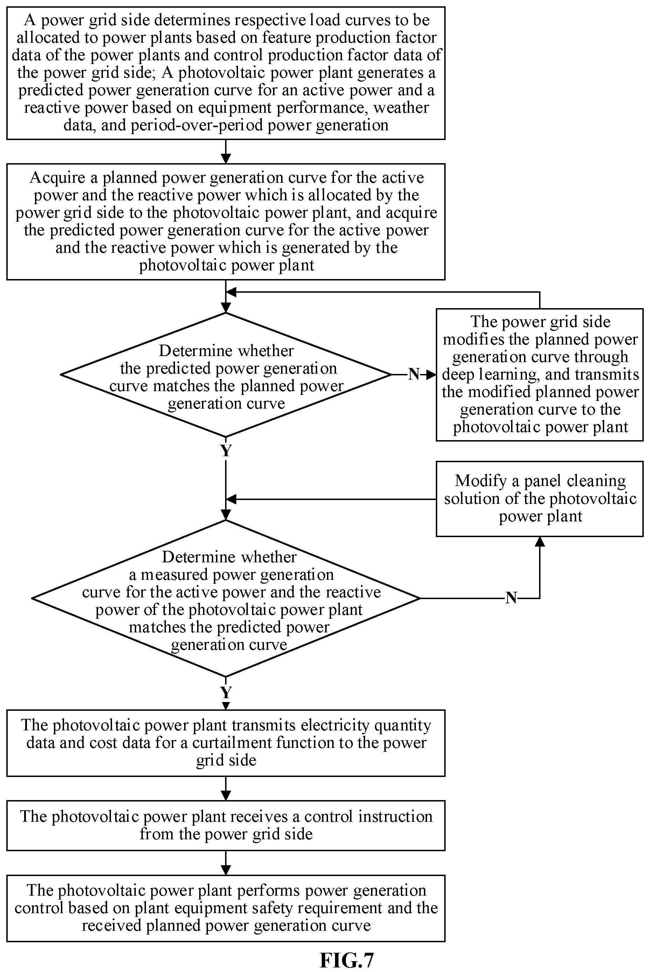

Hereinafter, an overall description of a method for power generation control based on active power and reactive power adjustments in photovoltaic power generation according to the technical solution of an embodiment of the present disclosure is provided with reference to FIG. 7. In FIG. 7, steps illustrated in FIG. 2 are involved. To distinguish from FIG. 2, FIG. 7 also shows processes of generating the planned power generation curve by the power grid side and generating the predicted power generation curve by the power plant side before acquiring the planned power generation curve and the predicted power generation curve.

In addition, after the second matching determination is performed (that is, whether the measured power generation curve matches the predicted power generation curve is determined), FIG. 7 also shows a step in which the photovoltaic power plant transmits electricity quantity data and cost data for a curtailment function to the power grid side, and a step in which the photovoltaic power plant receives a control instruction from the power grid side. The control instruction is transmitted after an agreement is reached between the power grid side and the photovoltaic power plant based on the electricity quantity data and the cost data. Therefore, in response to the photovoltaic power plant receiving the control instruction, which means that an agreement is already reached between the photovoltaic power plant and the power grid side based on the electricity quantity data and the cost data, real-time power generation control can be performed based on specific requirements of active power and reactive power in the planned power generation curve. In this control process, it remains essential to consider the plant equipment safety requirement and adjust the generated reactive power based on the variation characteristics of active power and reactive power in the inverter.

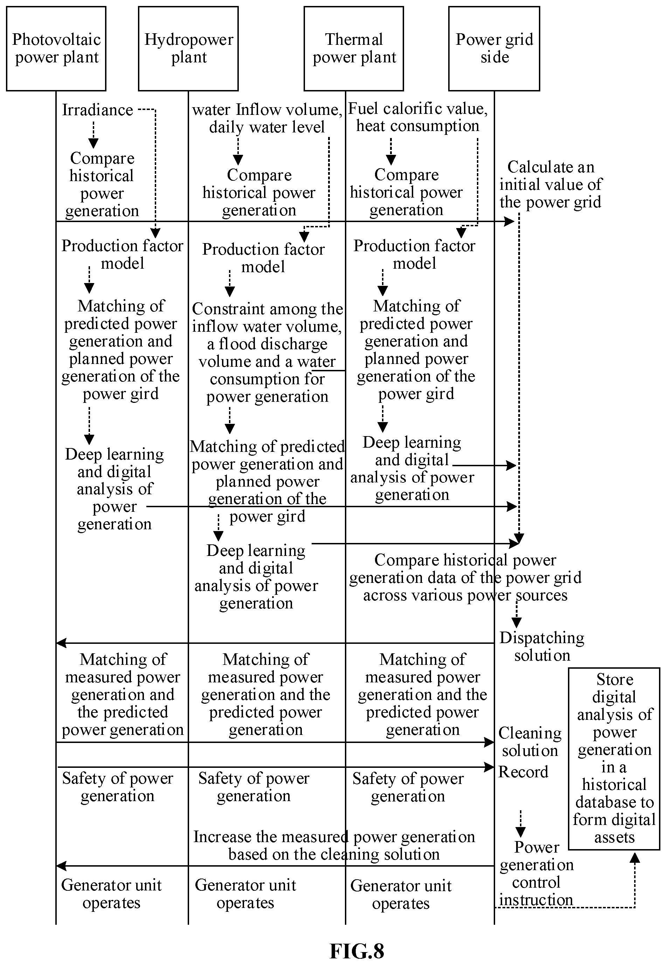

Based on the above description of the power generation control of the photovoltaic power plant, a process of overall power control of the power system is further provided according to an embodiment of the present disclosure. As shown in FIG. 8, FIG. 8 is a signaling diagram of overall power control in a power system. As shown in FIG. 8, the power plant side (including the photovoltaic power plant) includes: the photovoltaic power plant, a hydropower plant, and a thermal power plant. The process for the photovoltaic power plant is introduced in detail above with reference to FIGS. 2 and 7, and is not repeated here. The power generation control processes of the hydropower plant and the thermal power plant are similar to that of the photovoltaic power plant, involving comparison of their respective production factor data with the corresponding period-over-period data. For the hydropower plant, specific constraints related to certain production factor data of the power plant should also be considered. As shown in FIG. 8, regardless of whether it is the photovoltaic power plant, the hydropower plant, or the thermal power plant, two matching determinations are required to achieve stable and accurate control. The two matching determinations include: determining whether the predicted power generation of the power plant matches the planned power generation of the power grid side, and determining whether the measured power generation matches the predicted power generation of the power plant. Generator units operate based on a power generation control instruction, and the resulting data is incorporated into a historical database through digital analysis, serving as digital assets for subsequent dispatching and control of the power system.

Segmented control is introduced below. Segmented control involves implementing a virtual power plant function across various photovoltaic power plants during different periods through instructions (instructions generated based on weather conditions and digital twin of the power grid) issued by power grid dispatching. By employing segmented control, relevant power factors of active power and reactive power are provided, a maximum power limit within each photovoltaic power plant is adjusted to generate specific power factors and output values for active power and reactive power, and finally each photovoltaic power plant is controlled to convert excess active power into reactive power. The significance of segmented control lies in the following aspects. 1. The stability of the power system is maintained, the method of generating reactive power through SVG in the photovoltaic power plant is abandoned, thereby enhancing equipment utilization. 2. Active power is converted into reactive power, so that excess active power is utilized. 3. Virtual power plants aggregate and integrate resources to strengthen collaboration between the photovoltaic power plant and other power types. 4. Segmented control offers flexibility in control; in addition, the application of data twin allows a predetermined segmented function to be given in advance based on the load, weather and operating conditions, providing dispatching with an additional tool for managing active and reactive power throughout the day. 5. Considering the safety of the power grid and the power plant, segmented control effectively manages the photovoltaic power plant as a virtual power plant entity in the event of system collapse or abnormal grid voltage (either too high or too low), achieving integration of artificial intelligence with the power grid. Segmented control is beneficial to achieve peak shaving.

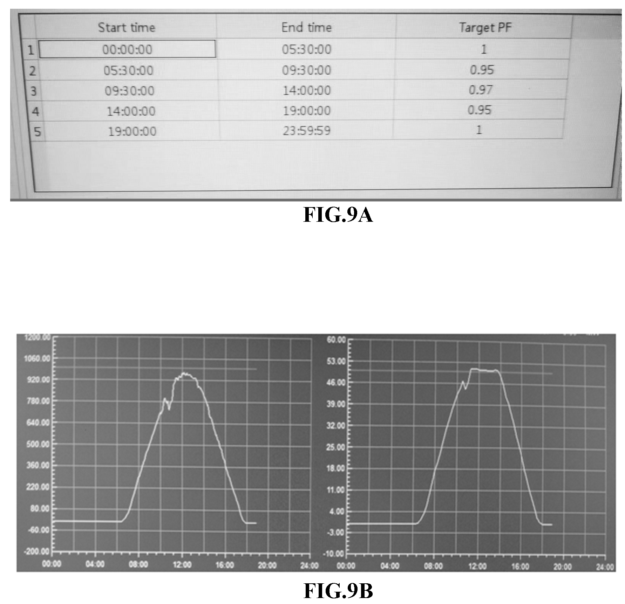

When segmented control is performed, as an example, a power factor of 0.95 is set in the segmented function for a period from 5:30 to 9:30, and a power factor of 0.97 is set for the period from 9:30 to 14:00. FIG. 9A is a schematic diagram of power factor configuration in segmented control. The effects of peak-shaving can be observed from FIG. 9B. The left portion of FIG. 9B shows the scenario before peak shaving through segmented control, and the right portion of FIG. 9B shows the scenario after peak shaving through segmented control.

Under the given power requirements, a constant power factor of 0.95 is set for reactive power compensation during the periods from 5:30 to 09:30 and from 14:00 to 19:00, to achieve the required power factor value of 0.95.

To reduce active power losses, a power factor of 0.97 is set for the period from 09:30 to 14:00 PM, with careful monitoring of the terminal voltage of the inverter.

Here are some considerations during segmented control.
1. Under the condition that the rated output voltage range of the inverter is ≥ 800Vac, the real-time reactive power value should not exceed 26MVar. 2. In response to a decrease in an output voltage of the inverter, a change in the terminal voltage of the inverter is considered while monitoring the change in the reactive power value of the entire power station; the power factor is appropriately increased to enhance reactive power output. 3. The night reactive power function of the inverter is disabled by default and can only be used after being set up through management tools such as an APP or data collector. The reactive power to be compensated by the power station is calculated to determine how many inverters are required to output reactive power at night. It is recommended to minimize the number of inverters that are required to output reactive power at night. 4. When the night reactive power compensation function is to be enabled, a PID module must be used in the system, and the night PID protection parameter setting is enabled. 5. Whether the voltage regulation mechanism can be frequently adjusted under load conditions greater than 80% is to be confirmed with the main transformer manufacturer.

Whether the active power output is to be increased when the output voltage sags depends on the cause of the voltage sag and the specific conditions of the power system. Here are some underlying logic and principles.
1. A relationship between active power and voltage: In the power system, the relationship among active power (P), voltage (U), and current (I) can be expressed by an equation P = UIcosφ (where cosφ is the power factor). If the load increases, the current I increases, then the voltage U must increase accordingly to maintain a constant active power P. If the voltage U decreases, the current I must increase to maintain the same active power output, which may lead to an increase in line losses and a further decrease in the voltage.
2. The cause of voltage sag: Voltage sag may be caused by a variety of reasons such as sudden increase in power grid load, decrease in output of generator units, failure of transmission lines. If the voltage sag results from an increased load, the active power output of the generator may be increased to maintain the voltage stability of the power grid.
3. Influence of reactive power: Reactive power directly influences voltage. A deficiency in reactive power leads to voltage decrease because inductive loads consume reactive power, triggering a direct-axis demagnetizing armature reaction in synchronous generators. This reaction reduces magnetic flux, thereby lowering the induced electromotive force and the voltage. Therefore, increasing reactive power output can help maintain or restore voltage levels.
4. Stability of the power grid: The stability of the power grid depends not only on active power but also on reactive power. When the voltage sags, both active power and reactive power are adjusted to ensure the stable operation of the power grid.
5. Dynamic voltage restorer (DVR): In some cases, the use of devices such as DVR provides temporary voltage support during voltage sags, reducing dependence on active power output.

In summary, whether the active power output is to be increased when output voltage sags requires a case-by-case analysis. Typically, to address the voltage sags, both active power and reactive power are to be adjusted comprehensively to ensure the stability and security of the power grid. In practice, grid operators determine how to adjust power generation and grid operational parameters in response to voltage sags based on real-time data and prediction models.

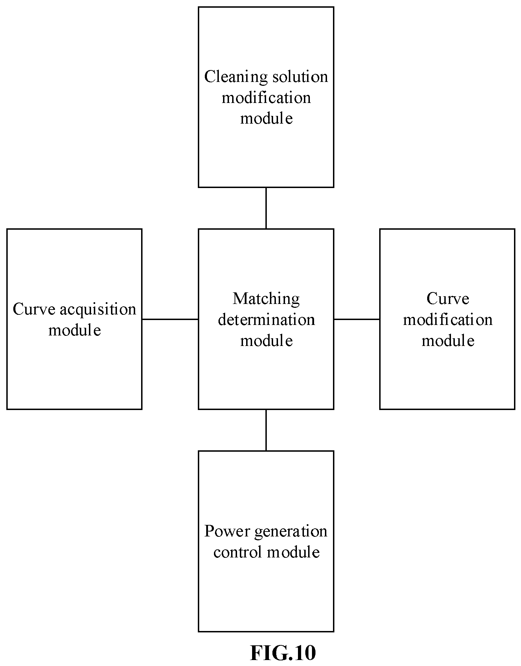

Based on the method introduced according to the above embodiments, an apparatus for power generation control based on active power and reactive power adjustments in photovoltaic power generation is further provided according to the present disclosure. Hereinafter, description is made with reference to FIG. 10.

FIG. 10 is a schematic structural diagram of an apparatus for power generation control based on active power and reactive power adjustments in photovoltaic power generation according to an embodiment of the present disclosure. As shown in FIG. 10, the apparatus includes: a curve acquisition module, a matching determination module, a curve modification module, a cleaning solution modification module, and a power generation control module.

The curve acquisition module is configured to acquire a planned power generation curve for an active power and a reactive power which is allocated by a power grid side to a photovoltaic power plant, and acquire a predicted power generation curve for the active power and the reactive power which is generated by the photovoltaic power plant.

The matching determination module is configured to determine whether the predicted power generation curve matches the planned power generation curve.

The curve modification module is configured to modify, by the power grid side, the planned power generation curve through deep learning, and transmit, by the power grid side, the modified planned power generation curve to the photovoltaic power plant in response to the predicted power generation curve not matching the planned power generation curve.

The matching determination module is further configured to determine whether a measured power generation curve for the active power and the reactive power of the photovoltaic power plant matches the predicted power generation curve in response to the predicted power generation curve matching the planned power generation curve.

The cleaning solution modification module is configured to modify a panel cleaning solution of the photovoltaic power plant in response to the measured power generation curve not matching the predicted power generation curve.

The power generation control module is configured to perform, by the photovoltaic power plant, power generation control based on a plant equipment safety requirement and the planned power generation curve received by the photovoltaic power plant in response to the measured power generation curve matching the predicted power generation curve.

In an embodiment, the power generation control module is specifically configured to: determine whether the plant equipment safety requirement of the photovoltaic power plant is met in a case of performing active and reactive power conversion control based on the planned power generation curve by the photovoltaic power plant during power generation; perform, by the photovoltaic power plant, power generation control based on the planned power generation curve in response to the plant equipment safety requirement being met; and perform, by the photovoltaic power plant, power generation control based on the planned power generation curve by employing peak shaving technology in response to the plant equipment safety requirement being not met.

In an embodiment, the power generation control module is specifically configured to: determine whether a current and a temperature of the plant equipment in the photovoltaic power plant meet the plant equipment safety requirement and whether an operating voltage of the plant equipment in the photovoltaic power plant is normal in a case of performing active and reactive power conversion control based on the planned power generation curve by the photovoltaic power plant during power generation.

In an embodiment, the power generation control module is specifically configured to: adjust a conduction angle of a thyristor in the photovoltaic power plant to perform peak shaving.

In an embodiment, the apparatus for power generation control based on active power and reactive power adjustments in photovoltaic power generation further includes a information determination module. The information determination module is configured to, before performing power generation control, analyze variation characteristics of the active power and the reactive power of an inverter in the photovoltaic power plant under varying voltage conditions, and determine inflection point information in a variation characteristic curve for the active power and the reactive power at different voltages, where the inflection point information includes a value on a reactive power coordinate axis and the value on an active power coordinate axis.

The power generation control module is specifically configured to: control the value of the reactive power of the inverter to be less than the value on the reactive power coordinate axis included in the inflection point information.

In an embodiment, the curve modification module is specifically configured to: perform, by the power grid side, deep learning regarding a difference between measured daily power generation and historical daily power generation of the photovoltaic power plant and the difference between a performance ratio and the period-over-period performance ratio of the photovoltaic power plant, identify an influence of haze based on panel cleaning degree data of the photovoltaic power plant, and adjust the planned power generation curve.

In an embodiment, the cleaning solution modification module is specifically configured to: analyze a difference between measured daily power generation and historical daily power generation of the photovoltaic power plant; for each zone in the photovoltaic power plant: analyze a correspondence between panel cleaning degree data and a power generation efficiency of the zone; analyze the correspondence, the difference between a performance ratio and the period-over-period performance ratio of the zone, and the difference between an overall performance ratio and the overall period-over-period performance ratio of the photovoltaic power plant based on the difference between measured daily power generation and historical daily power generation of the photovoltaic power plant, to obtain an influence degree of haze on the zone; and modify a current panel cleaning solution based on respective influence degrees of haze on the zones.

In an embodiment, the cleaning solution modification module is specifically configured to: generate panel cleaning recommendation information based on the influence degrees of haze on the zones, where the panel cleaning recommendation information includes at least one of: area cleaning recommendation information, cleaning frequency recommendation information, cleaning speed recommendation information, and cleaning manpower configuration recommendation information; and modify the current panel cleaning solution based on the panel cleaning recommendation information.

In an embodiment, the apparatus for power generation control based on active power and reactive power adjustments in photovoltaic power generation further includes a first curve generation module. The first curve generation module is configured to generate, by the power grid side, the planned power generation curve for an active power and a reactive power which is allocated to a photovoltaic power plant. The first curve generation module is specifically configured to: determine, by the power grid side, respective load curves to be allocated to all power plants based on feature production factor data of the power plants and control production factor data of the power grid side, where the load curves include the planned power generation curve for the active power and the reactive power which is allocated to the photovoltaic power plant, the active power is used to control a frequency, and the reactive power is used to control a voltage.

In an embodiment, the apparatus for power generation control based on active power and reactive power adjustments in photovoltaic power generation further includes a second curve generation module. The second curve generation module is configured to generate, by the photovoltaic power plant, the predicted power generation curve for the active power and the reactive power. The second curve generation module is specifically configured to: generate, by the photovoltaic power plant, the predicted power generation curve for the active power and the reactive power based on equipment performance, weather data, and period-over-period power generation, where the equipment performance includes variation characteristics of the active power and the reactive power of an inverter under varying voltage conditions.

In an embodiment, the apparatus for power generation control based on active and reactive power adjustment in photovoltaic power generation further includes a transmitting module. The transmitting module is configured to, before the photovoltaic power plant performs power generation control based on a plant equipment safety requirement and the planned power generation curve received by the photovoltaic power plant, transmit, by the photovoltaic power plant, electricity quantity data and cost data for a curtailment function to the power grid side.

The power generation control module is configured to perform, by the photovoltaic power plant, power generation control based on the plant equipment safety requirement of the photovoltaic power plant and the received planned power generation curve in response to a control instruction received from the power grid side by the photovoltaic power plant, where the control instruction is transmitted after an agreement is reached between the power grid side and the photovoltaic power plant based on the electricity quantity data and the cost data.

It should be noted that embodiments in this specification are described in a progressive manner, the same and similar parts among the embodiments may refer to each other, and each of the embodiments emphasizes differences from other embodiments. In particular, the apparatus embodiment is substantially similar to the method embodiment, thus is described relatively simple, and reference may be made to relevant parts of the method embodiment for details. The apparatus embodiments described above are only illustrative, in which the units described as separate components may be or may not be physically separated, and the components shown as units may be or may not be physical units, that is, may be located in one place, or distributed over multiple network elements. Some or all of the modules may be selected as needed to achieve the objective of the solution of the embodiments. Those skilled in the art can understand and implement the embodiments without any creative effort.

Described above are only embodiments of the present disclosure, and a protection scope of the present disclosure is not limited to these embodiments. Any modification or replacement that can be easily conceived by those skilled in the art within the technical scope disclosed herein shall fall within the protection scope of the present disclosure. Therefore, the protection scope of the present disclosure is subject to a scope of the claims.

## Claims

1. A method for power generation control based on active power and reactive power adjustments in photovoltaic power generation, comprising:
acquiring a planned power generation curve for an active power and a reactive power which is allocated by a power grid side to a photovoltaic power plant, and acquiring a predicted power generation curve for the active power and the reactive power which is generated by the photovoltaic power plant;
determining whether the predicted power generation curve matches the planned power generation curve;
in response to the predicted power generation curve not matching the planned power generation curve, modifying, by the power grid side, the planned power generation curve through deep learning, and transmitting, by the power grid side, the modified planned power generation curve to the photovoltaic power plant;
in response to the predicted power generation curve matching the planned power generation curve, determining whether a measured power generation curve for the active power and the reactive power of the photovoltaic power plant matches the predicted power generation curve;
in response to the measured power generation curve not matching the predicted power generation curve, modifying a panel cleaning solution of the photovoltaic power plant; and
in response to the measured power generation curve matching the predicted power generation curve, performing, by the photovoltaic power plant, power generation control based on plant equipment safety requirement and the planned power generation curve received by the photovoltaic power plant.

2. The method according to claim 1, wherein the performing, by the photovoltaic power plant, power generation control based on the plant equipment safety requirement and the planned power generation curve received by the photovoltaic power plant comprises:
determining whether the plant equipment safety requirement of the photovoltaic power plant is met in a case of performing active and reactive power conversion control based on the planned power generation curve by the photovoltaic power plant during power generation;
in response to the plant equipment safety requirement being met, performing, by the photovoltaic power plant, power generation control based on the planned power generation curve; and
in response to the plant equipment safety requirement being not met, performing, by the photovoltaic power plant, power generation control based on the planned power generation curve by employing peak shaving technology.

3. The method according to claim 2, wherein the determining whether the plant equipment safety requirement of the photovoltaic power plant is met in a case of performing active and reactive power conversion control based on the planned power generation curve by the photovoltaic power plant during power generation comprises:
determining whether a current and a temperature of the plant equipment in the photovoltaic power plant meet the plant equipment safety requirement and whether an operating voltage of the plant equipment in the photovoltaic power plant is normal in a case of performing active and reactive power conversion control based on the planned power generation curve by the photovoltaic power plant during power generation.

4. The method according to claim 2, wherein the performing, by the photovoltaic power plant, power generation control based on the planned power generation curve by employing peak shaving technology comprises:
adjusting a conduction angle of a thyristor in the photovoltaic power plant to perform peak shaving.

5. The method according to claim 1, wherein before performing power generation control, the method further comprises:
analyzing variation characteristics of the active power and the reactive power of an inverter in the photovoltaic power plant under varying voltage conditions, and determining inflection point information in a variation characteristic curve for the active power and the reactive power at different voltages, wherein the inflection point information comprises a value on a reactive power coordinate axis and a value on an active power coordinate axis, and
wherein the performing power generation control comprises:
controlling a value of the reactive power of the inverter to be less than the value on the reactive power coordinate axis comprised in the inflection point information.

6. The method according to claim 1, wherein the modifying, by the power grid side, the planned power generation curve through deep learning comprises:
performing, by the power grid side, deep learning regarding a difference between measured daily power generation and historical daily power generation of the photovoltaic power plant and a difference between a performance ratio of the photovoltaic power plant and a period-over-period performance ratio of the photovoltaic power plant, and identifying, by the power grid side, an influence of haze based on panel cleaning degree data of the photovoltaic power plant, to adjust the planned power generation curve.

7. The method according to claim 1, wherein the modifying a panel cleaning solution of the photovoltaic power plant comprises:
analyzing a difference between measured daily power generation and historical daily power generation of the photovoltaic power plant;
for each zone in the photovoltaic power plant:
analyzing a correspondence between panel cleaning degree data and a power generation efficiency of the zone;
analyzing, based on the difference between measured daily power generation and historical daily power generation, the correspondence, a difference between a performance ratio of the zone and a period-over-period performance ratio of the zone, and a difference between an overall performance ratio and an overall period-over-period performance ratio of the photovoltaic power plant, to obtain an influence degree of haze on the zone; and
modifying a current panel cleaning solution based on respective influence degrees of haze on the zones.

8. The method according to claim 7, wherein the modifying the current panel cleaning solution based on respective influence degrees of haze on the zones comprises:
generating panel cleaning recommendation information based on the influence degrees of haze on the zones, wherein the panel cleaning recommendation information comprises at least one of: area cleaning recommendation information, cleaning frequency recommendation information, cleaning speed recommendation information, and cleaning manpower configuration recommendation information; and
modifying the current panel cleaning solution based on the panel cleaning recommendation information.

9. The method according to claim 1, wherein the planned power generation curve for the active power and the reactive power which is allocated by the power grid side to the photovoltaic power plant is generated by:
determining, by the power grid side, respective load curves to be allocated to power plants based on feature production factor data of the power plants and control production factor data of the power grid side, wherein the load curves comprise the planned power generation curve for the active power and the reactive power which is allocated to the photovoltaic power plant, the active power is used to control a frequency, and the reactive power is used to control a voltage.

10. The method according to claim 1, wherein a scheme for generating, by the photovoltaic power plant, the predicted power generation curve for the active power and the reactive power comprises:
generating, by the photovoltaic power plant, the predicted power generation curve for the active power and the reactive power based on equipment performance, weather data, and period-over-period power generation, wherein the equipment performance comprises variation characteristics of the active power and the reactive power of an inverter under varying voltage conditions.

11. The method according to claim 1, wherein before the performing, by the photovoltaic power plant, power generation control based on the plant equipment safety requirement and the planned power generation curve received by the photovoltaic power plant, the method further comprises:
transmitting, by the photovoltaic power plant, electricity quantity data and cost data for a curtailment function to the power grid side; and
performing, by the photovoltaic power plant, power generation control based on the plant equipment safety requirement and the received planned power generation curve in response to a control instruction being received from the power grid side by the photovoltaic power plant, wherein the control instruction is transmitted after an agreement is reached between the power grid side and the photovoltaic power plant based on the electricity quantity data and the cost data.

12. An apparatus for power generation control based on active power and reactive power adjustments in photovoltaic power generation, comprising:
a curve acquisition module, configured to acquire a planned power generation curve for an active power and a reactive power which is allocated by a power grid side to a photovoltaic power plant, and acquire a predicted power generation curve for the active power and the reactive power which is generated by the photovoltaic power plant;
a matching determination module, configured to determine whether the predicted power generation curve matches the planned power generation curve;
a curve modification module, configured to, in response to the predicted power generation curve not matching the planned power generation curve, modify, by the power grid side, the planned power generation curve through deep learning, and transmit, by the power grid side, the modified planned power generation curve to the photovoltaic power plant;
wherein the matching determination module is further configured to determine whether a measured power generation curve for the active power and the reactive power of the photovoltaic power plant matches the predicted power generation curve in response to the predicted power generation curve matching the planned power generation curve;
a cleaning solution modification module, configured to modify a panel cleaning solution of the photovoltaic power plant in response to the measured power generation curve not matching the predicted power generation curve; and
a power generation control module, configured to perform, by the photovoltaic power plant, power generation control based on plant equipment safety requirement and the planned power generation curve received by the photovoltaic power plant, in response to the measured power generation curve matching the predicted power generation curve.
